# EUROPÄISCHE PATENTSCHRIFT

(11) **EP 3 385 513 B1**
(45) Veröffentlichungstag und Bekanntmachung des Hinweises auf die Patenterteilung: **03.06.2020**
(21) Anmeldenummer: 18165461.7
(22) Anmeldetag: 03.04.2018
(51) Int. Cl.: F01L 1/18, F01L 13/00, F01L 13/08

(54) **VARIABLER VENTILTRIEB**
VARIABLE VALVE DRIVE
COMMANDE DE SOUPAPE VARIABLE

(30) Priorität: 08.04.2017 DE 102017003439
(43) Veröffentlichungstag der Anmeldung: 10.10.2018
(73) Patentinhaber: MAN Truck & Bus SE, 80995 München (DE)
(72) Erfinder: Ruf, Sibylle, 90602 Pyrbaum (DE); Fink, Adrian, 90451 Nürnberg (DE)
(74) Vertreter: v. Bezold & Partner Patentanwälte - PartG mbB

(56) Entgegenhaltungen:
- WO-A1-2015/185046
- WO-A1-2016/059456
- AT-A1- 511 050
- DE-A1- 3 346 556
- JP-A- S61 129 411
- JP-A- 2005 155 555
- JP-U- S61 155 605

## Beschreibung

Die Erfindung betrifft einen variablen Ventiltrieb für einen Verbrennungsmotor und ein Kraftfahrzeug mit einem variablen Ventiltrieb.

Zum Verändern der Steuerzeiten von Ladungswechselventilen eines Verbrennungsmotors können variable Ventiltriebe verwendet werden. Variable Ventiltriebe können zusätzlich oder alternativ die Ventilhübe der Ladungswechselventile anpassen.

Variable Ventiltriebe, bei denen axial verschiebbare Nockenfolger mit unterschiedlichen nebeneinander angeordneten Nocken einer Nockenwelle in Eingriff gebracht werden können, sind aus der JP S61 155605 U, der JP S61 129411 A, der JP 2005 155555 A, der WO 2016/059456 A1, der WO 2015/185046 A1 und der DE 33 46 556 A1 bekannt.

Ein weiterer bekannter variabler Ventiltrieb ist das sogenannte Audi Valvelift System (AVS). Hierbei ist ein Nockenträger axial verschiebbar auf einer Nockenwelle angeordnet. Der Nockenträger weist einen ersten Nocken und einen in Längsrichtung der Nockenwelle versetzt angeordneten zweiten Nocken auf. Der erste Nocken und der zweite Nocken unterscheiden sich beispielsweise in einer Kontur und/oder sind umfangsversetzt zueinander angeordnet. Über eine Aktorvorrichtung kann der Nockenträger zwischen einer ersten Axialposition und einer zweiten Axialposition verschoben werden. In der ersten Axialposition des Nockenträgers ist ein Ladungswechselventil über einen Übertragungshebel in Wirkverbindung mit dem ersten Nocken. In der zweiten Axialposition des Nockenträgers ist das Ladungswechselventil über den Übertragungshebel in Wirkverbindung mit dem zweiten Nocken.

Das bekannte System kann den Nachteil haben, dass eine relativ große Masse in Form des Nockenträgers mit dem Doppelnocken bewegt werden muss. Die relativ große Masse kann sich negativ auf die erzielbare Geschwindigkeit bei Schaltvorgängen zwischen den Nocken auswirken.

Der Erfindung liegt somit die Aufgabe zu Grunde, einen verbesserten variablen Ventiltrieb bereitzustellen, der insbesondere die Nachteile des Standes der Technik überwindet.

Die Aufgabe wird gelöst durch einen variablen Ventiltrieb für einen Verbrennungsmotor gemäß dem unabhängigen Anspruch. Vorteilhafte Weiterbildungen sind in den abhängigen Ansprüchen und der Beschreibung angegeben.

Der variable Ventiltrieb weist mindestens ein Hubventil, insbesondere ein Ladungswechselventil, und eine Nockenwelle auf. Die Nockenwelle weist einen ersten Nocken und einen in einer Längsrichtung der Nockenwelle versetzt angeordneten zweiten Nocken auf. Eine Nockenkontur des ersten Nockens unterscheidet sich von einer Nockenkontur des zweiten Nockens und/oder der erste Nocken und der zweiten Nocken sind in einer Umfangsrichtung um eine Längsachse der Nockenwelle versetzt angeordnet. Der variable Ventiltrieb weist ferner einen Übertragungshebel, der in Wirkverbindung zwischen dem mindestens einen Hubventil und der Nockenwelle zum Betätigen des mindestens einen Hubventils angeordnet ist, auf. Der Übertragungshebel weist eine Schwenkachse, eine Halterung und einen Nockenfolger auf. Die Halterung ist schwenkbar um die Schwenkachse gelagert. Die Halterung hält den Nockenfolger. Die Halterung ist parallel zur Schwenkachse und/oder parallel zur Nockenwelle axial verschiebbar gelagert, sodass der Nockenfolger wahlweise der Nockenkontur des ersten Nockens oder der Nockenkontur des zweiten Nockens folgt.

Da die Halterung lediglich den Nockenfolger hält, kann sie kompakt aufgebaut sein und daher eine geringe Masse aufweisen. Dies kann insbesondere schnelle Schaltvorgänge zwischen dem ersten Nocken und dem zweiten Nocken ermöglichen.

Der erste Nocken und der zweiten Nocken können so ausgebildet sein, dass sie unterschiedliche Betriebe (Steuerzeiten und/oder Hübe) des verbundenen Hubventils bewirken.

Die Halterung kann zwischen einer ersten Axialposition, in der eine Wirkverbindung zwischen dem Ladungswechselventil und dem ersten Nocken besteht, und einer zweiten Axialposition, in der eine Wirkverbindung zwischen dem Ladungswechselventil und dem zweiten Nocken besteht, verschiebbar sein. Insbesondere können die erste Axialposition und die zweite Axialposition durch einen entsprechenden ersten Anschlag und einen entsprechenden zweiten Anschlag für die Halterung definiert (festgelegt) sein.

Der Verbrennungsmotor kann bspw. in einem Kraftfahrzeug, insbesondere einem Nutzfahrzeug wie einem Lastkraftwagen, einem Omnibus, einer Baumaschine oder einer Agrarmaschine, verwendet werden. Der Verbrennungsmotor kann auch in einem Schienenfahrzeug, als Schiffsmotor oder als stationärer Motor bspw. zur Stromerzeugung verwendet werden.

In einer bevorzugten Ausführungsform ist die Halterung direkt auf der Schwenkachse schwenkbar und axial verschiebbar gelagert. Die direkte Lagerung auf der Schwenkachse kann einem besonders einfachen Aufbau ermöglichen.

Gemäß der Erfindung weist der Übertragungshebel ferner ein Trägerbauteil auf, das schwenkbar um die Schwenkachse gelagert ist und die Halterung axial verschiebbar lagert. Die Zwischenschaltung eines Trägerbauteils kann eine besonders kompakte Ausführung der Halterung ermöglichen.

In einem Ausführungsbeispiel weist das Trägerbauteil oder die Halterung (insbesondere wenn kein Trägerbauteil vorhanden ist) eine Achsbohrung für die Schwenkachse auf. Die Verbindung zwischen Achsbohrung und Schwenkachse ermöglicht eine besonders einfache drehbare Lagerung des Trägerbauteils oder der Halterung auf der Schwenkachse.

In einem weiteren Ausführungsbeispiel ist das Trägerbauteil mit der Halterung drehfest um die Schwenkachse verbunden. Die Verbindung kann insbesondere einen Formschluss zwischen der Halterung und dem Trägerbauteil aufweisen. Dies hat den Vorteil, dass zusätzliche Mittel zur drehfesten Verbindung des Trägerbauteils und der Halterung eingespart werden können.

Vorteilhafterweise weist das Trägerbauteil in einer Querschnittsebene senkrecht zu einer Längsrichtung der Schwenkachse eine zur Schwenkachse rotationsasymmetrische (nicht-rotationssymmetrische) Außenkontur auf. Alternativ oder zusätzlich weist die Halterung in einer Querschnittsebene senkrecht zu einer Längsrichtung der Schwenkachse eine zur Schwenkachse rotationsasymmetrische (nicht-rotationssymmetrische) Innenkontur auf. Dies ermöglicht eine drehfeste Verbindung zwischen dem Trägerbauteil und der Halterung ohne Vorsehen zusätzlicher Mittel.

In einer Ausführungsvariante weist die Außenkontur und/oder die Innenkontur eine Profilierung, vorzugsweise ein Keilprofil oder Zahnprofil, auf. Alternativ oder zusätzlich weist die Außenkontur und/oder die Innenkontur insbesondere eine Mehreckform, zum Beispiel eine Rechteckform, auf. Derartige Konturen sind fertigungstechnisch einfach realisierbar und zuverlässig in der Anwendung.

Es ist möglich, dass die Halterung das Trägerbauteil nur teilweise umgreift. Mit anderen Worten gesagt, muss eine Innenkontur der Halterung zur Verbindung mit einer Außenkontur des Trägerbauteils nicht geschlossen sein.

In einer weiteren Ausführungsvariante ist das Trägerbauteil auf der Schwenkachse axial gesichert, zum Beispiel durch einen auf der Schwenkachse gesicherten Sicherungsring oder eine Passfeder. Dies verhindert eine Verschiebung des Trägerbauteils auf der Schwenkachse.

In einer Ausführungsform weist die Halterung und/oder das Trägerbauteil einen Betätigungsabschnitt zum Betätigen des mindestens einen Hubventils auf.

Der Betätigungsabschnitt kann auf einer dem Nockenfolger bezüglich der Schwenkachse gegenüberliegenden Seite oder auf der gleichen Seite wie der Nockenfolger bezüglich der Schwenkachse angeordnet sein.

In einer weiteren Ausführungsform weist die Halterung einen Gabelbereich mit zwei gegenüberliegenden Vorsprüngen auf. Zwischen den Vorsprüngen erstreckt sich insbesondere eine Drehachse, auf der der Nockenfolger drehbar gelagert ist. Der Gabelbereich ermöglicht eine besonders kompakte Lagerung des Nockenfolgers.

Vorteilhafterweise kann der Nockenfolger als eine Rolle ausgebildet sein, die von der Halterung insbesondere drehbar gelagert ist. Dies hat den Vorteil, dass die Reibung im Ventiltrieb verringert werden kann.

In einem Ausführungsbeispiel weist der variable Ventiltrieb ferner eine Aktorvorrichtung auf, die dazu ausgebildet ist, die Halterung parallel zur Schwenkachse und/oder zur Nockenwelle axial zu verschieben. Die Aktorvorrichtung kann die Halterung zwischen der ersten Axialposition und der zweiten Axialposition verschieben.

In einem weiteren Ausführungsbeispiel ist die Aktorvorrichtung als eine pneumatische, hydraulische, elektromechanische und/oder elektromagnetische Aktorvorrichtung ausgebildet.

In einer Ausführungsform ist die Aktorvorrichtung direkt oder indirekt, zum Beispiel über ein Gestänge, mit der Halterung verbunden.

In einer weiteren Ausführungsform ist die Aktorvorrichtung zumindest teilweise in dem Übertragungshebel integriert oder extern von dem Übertragungshebel angeordnet. Eine externe Anordnung kann die Montage und Wartung erleichtern. Eine Integration kann einen kompakteren Aufbau ermöglichen.

In einer Ausführungsvariante greift die Aktorvorrichtung zum Verschieben der Halterung an einer Seitenfläche der Halterung, die sich senkrecht zu einer Längsrichtung der Schwenkachse erstreckt, an. Insbesondere greift die Aktorvorrichtung an einem Vorsprung (oder beiden Vorsprüngen) eines Gabelbereichs der Halterung an. Eine derartige Anordnung kann besonders bauraumgünstig sein, da der Aktor in einem freien Bereich neben dem Übertragungshebel angeordnet werden kann, ohne den Bauraum des variablen Ventiltriebs zu erweitern. Dies kann insbesondere bei einem System mit zwei obenliegenden Nockenwellen günstig sein.

In einer weiteren Ausführungsvariante ist die Aktorvorrichtung so ausgebildet und/oder wird so angesteuert, dass der Nockenfolger nur zwischen einem Grundkreis des ersten Nockens und einem Grundkreis des zweiten Nockens verschoben wird.

In einem Ausführungsbeispiel weist die Nockenwelle mindestens einen weiteren Nocken auf, der in einer Längsrichtung der Nockenwelle versetzt zu dem ersten Nocken und dem zweiten Nocken angeordnet ist. Eine Nockenkontur jedes weiteren Nockens unterscheidet sich von einer Nockenkontur des ersten Nockens und einer Nockenkontur des zweiten Nockens alternativ oder zusätzlich ist jeder weitere Nocken in einer Umfangsrichtung um eine Längsachse der Nockenwelle versetzt zu dem ersten Nocken und dem zweiten Nocken angeordnet. Der Nockenfolger folgt durch eine Verschiebung der Halterung zusätzlich wahlweise der Nockenkontur jedes weiteren Nockens. Dies hat den Vorteil, dass eine größere Flexibilität hinsichtlich verschiedener Steuerzeiten und/oder Ventilhübe vorgesehen werden kann.

Vorteilhafterweise ist der Übertragungshebel als ein Schlepphebel oder ein Kipphebel ausgebildet. Somit kann der Übertragungshebel in verschiedene Ventiltriebsystemen, zum Beispiel mit obenliegender Nockenwelle oder mit unterliegender Nockenwelle, integriert werden.

In einer Ausführungsform ist das mindestens eine Hubventil ein Einlassventil des Verbrennungsmotors und der erste Nocken bewirkt einen Normalbetrieb und/oder der zweite Nocken bewirkt einen Millerbetrieb, einen Atkinsonbetrieb, einen Thermomanagementbetrieb, einen Dekompressionsbetrieb oder eine Zylinderabschaltung. Der Normalbetrieb entspricht einer Öffnung des Einlassventils gemäß einem Diesel- oder Ottokreisprozess, bei dem das Einlassventil während des Einlasstaktes geöffnet ist. Beim Millerbetrieb wird relativ dazu das Einlassventil früher geschlossen, wodurch die Ladeluftmenge verringert wird. Beim Atkinsonbetrieb wird relativ zum Normalbetrieb das Einlassventil später geschlossen. Auch hierdurch verringert sich die Ladeluftmenge.

In einer weiteren Ausführungsform ist das mindestens eine Hubventil ein Auslassventil des Verbrennungsmotors und der erste Nocken bewirkt einen Normalbetrieb und/oder der zweite Nocken bewirkt einen Motorbremsbetrieb, einen Thermomanagementbetrieb, einen Dekompressionsbetrieb oder eine Zylinderabschaltung. Der Normalbetrieb entspricht einer Öffnung des Auslassventils gemäß einem Diesel- oder Ottokreisprozess, bei dem das Auslassventil während des Ausschubtaktes geöffnet ist. Beim Motorbremsbetrieb kann das Auslassventil am Ende des Verdichtungstaktes geöffnet und/oder am Ende Ausschubtaktes geöffnet werden.

Beim Thermomanagementbetrieb wird der Wärmehaushalt des Verbrennungsmotors gegenüber dem Normalbetrieb gezielt beeinflusst, um bspw. eine Abgastemperatur zu erhöhen. Beim Dekompressionsbetrieb wird das Hubventil offengehalten. Bei der Zylinderabschaltung wird das Hubventil nicht betätigt. Der zweite Nocken kann ein Nullnocken sein.

Die Erfindung betrifft ferner ein Kraftfahrzeug, insbesondere ein Nutzfahrzeug, mit einem variablen Ventiltrieb wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines variablen Ventiltriebs gemäß einer ersten Ausführungsform;
- Figur 2: eine weitere perspektivische Ansicht des variablen Ventiltriebs gemäß der ersten Ausführungsform;
- Figur 3: eine weitere perspektivische Ansicht des variablen Ventiltriebs gemäß der ersten Ausführungsform mit Aktorvorrichtung;
- Figur 4: eine perspektivische Ansicht eines variablen Ventiltriebs gemäß einer zweiten Ausführungsform; und
- Figur 5: eine weitere perspektivische Ansicht des variablen Ventiltriebs gemäß der zweiten Ausführungsform.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

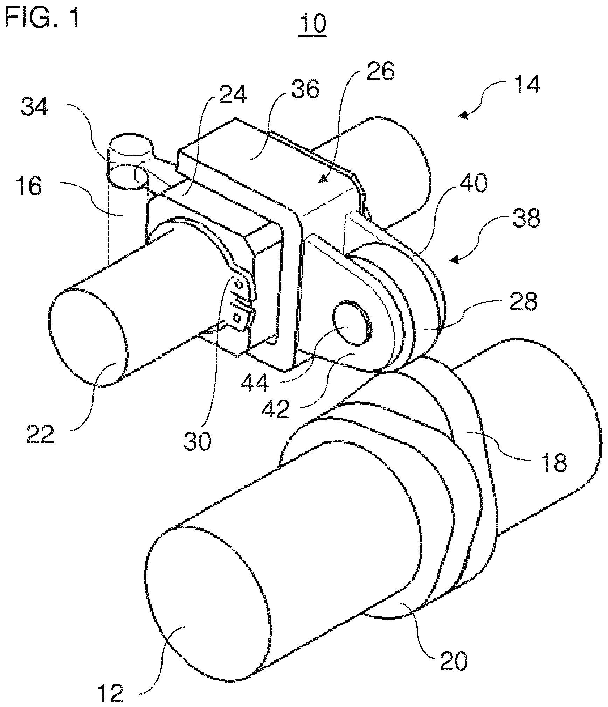

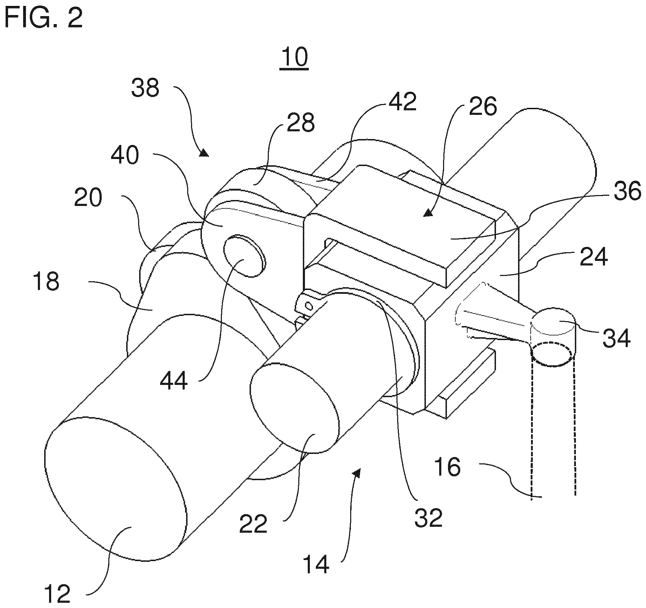

Die Figuren 1 und 2 zeigen einen variablen Ventiltrieb 10 in unterschiedlichen Ansichten. Der variable Ventiltrieb 10 weist eine Nockenwelle 12, einen Übertragungshebel 14 und ein Hubventil 16 (nur abschnittsweise mit gestrichelten Linien in Figur 1 und 2 angedeutet) auf. Das Hubventil ist insbesondere ein Ladungswechselventil, zum Beispiel ein Einlassventil oder ein Auslassventil, eines Zylinders eines Verbrennungsmotors.

Die Nockenwelle 12 kann als eine obenliegende oder eine untenliegende Nockenwelle ausgebildet sein. Die Nockenwelle 12 weist einen ersten Nocken 18 und einen zweiten Nocken 20 auf. Der ersten Nocken 18 ist in einer Längsrichtung der Nockenwelle 12 neben dem zweiten Nocken 20 angeordnet. Der erste Nocken 18 grenzt an den zweiten Nocken 20. In anderen Ausführungsformen können die Nocken 18 und 20 in einer Längsrichtung der Nockenwelle 12 voneinander beabstandet sein.

Die Nocken 18 und 20 sind dazu ausgebildet, dass Hubventil 16 unterschiedlich zu betätigen. Die Nocken 18, 20 sind in einer Umfangsrichtung um eine Längsachse der Nockenwelle 12 versetzt angeordnet. Zusätzlich oder alternativ könnten die Nocken 18, 20 unterschiedliche Nockenkonturen aufweisen, zum Beispiel unterschiedliche hohe und/oder breite Erhebungen aufweisen.

Der Übertragungshebel 14 ist in Wirkverbindung zwischen der Nockenwelle 12 und dem Hubventil 16 angeordnet. Im Einzelnen kann der Übertragungshebel 14 wahlweise eine Wirkverbindung zwischen dem ersten Nocken 18 und dem Hubventil 16 oder zwischen dem zweiten Nocken 20 und dem Hubventil 16 herstellen. In einigen Ausführungsformen kann der Übertragungshebel 14 mit mehreren Hubventilen in Wirkverbindung stehen.

Der Übertragungshebel 14 weist eine Schwenkachse 22, ein Trägerbauteil 24, eine Halterung 26 und einen Nockenfolger 28 auf.

Das Trägerbauteil 24 ist schwenkbar auf der Schwenkachse 22 angeordnet. Die Schwenkachse 22 kann bspw. in einem Zylinderkopf befestigt sein. Im Einzelnen weist das Trägerbauteil 24 eine Achsbohrung für die Schwenkachse 22 auf. Das Trägerbauteil 24 ist um eine Längsachse der Schwenkachse 22 schwenkbar. Das Trägerbauteil 24 ist axial auf der Schwenkachse 22 festgelegt, zum Beispiel durch die dargestellten Sicherungsringe 30, 32. In einer Ausführungsform kann eines der Sicherungsbauteile auch als ein Anschlag für die verschiebbare Halterung 26 dienen.

Das Trägerbauteil 24 weist einen Betätigungsabschnitt 34 auf, der direkt oder indirekt mit dem Abschnitt des Ladungswechselventils 16 in Wirkverbindung steht. Alternativ könnte beispielsweise die Halterung 26 den Betätigungsabschnitt 34 aufweisen.

Es ist auch möglich, dass der Betätigungsabschnitt bspw. über ein Brücke mit mehreren Ladungswechselventilen in Wirkverbindung steht.

In der gezeigten Ausführungsform weist das Trägerbauteil 24 eine rechteckige Grundform mit angefasten Kanten auf. Insbesondere weist das Trägerbauteil 24 in einer Ebene senkrecht zur Längsachse der Schwenkachse 22 eine rechteckige Außenkontur mit angefasten Ecken auf.

Die Halterung 26 weist einen Führungsbereich 36 und einen Gabelbereich 38 auf. Der Gabelbereich 38 ist an dem Führungsbereich 36 befestigt, zum Beispiel geschweißt. Der Führungsbereich 36 weist einen U-förmigen Querschnitt in einer Ebene senkrecht zur Längsrichtung der Schwenkachse 22 auf. Der Führungsbereich 36 umgreift das Trägerbauteil 24 teilweise. Der Führungsbereich 36 und das Trägerbauteil 24 sind so angepasst, dass der Führungsbereich 36 auf dem Trägerbauteil 24 verschiebbar ist. Der Führungsbereich 36 ist auf dem Trägerbauteil 24 in einer Richtung parallel zur Schwenkachse 22 und zur Nockenwelle 12 verschiebbar.

In anderen Ausführungsformen kann die Halterung für den Nockenfolger beispielsweise direkt auf der Schwenkachse 22 angebracht sein. Mit anderen Worten gesagt, das Trägerbauteil kann entfallen. Die Halterung ist dann axial verschiebbar mit der Schwenkachse 22 verbunden. Die Halterung ist zudem drehbar mit der Schwenkachse 22 verbunden. Die Halterung weist beispielsweise eine kreisrunde Achsbohrung für die Schwenkachse 22 auf.

Die Halterung 26 hält den Nockenfolger 28. Im Einzelnen weist die Halterung 26 den Gabelbereich 38 auf. Der Gabelbereich 38 weist zwei gegenüberliegende Vorsprünge oder Flanken 40, 42 auf. Die Vorsprünge 40, 42 erstrecken sich von dem Führungsbereich 36. Zwischen den Vorsprüngen 40, 42 erstreckt sich eine Drehachse 44. Auf der Drehachse 44 ist der Nockenfolger 28 angeordnet. In der vorliegenden Ausführungsform ist der Nockenfolger 28 als eine Rolle ausgebildet. Allerdings kann der Nockenfolger 28 auch eine andere Form aufweisen.

Der Nockenfolger 28 ist dazu ausgebildet, einer Nockenkontur eines Nockens während einer Drehung der Nockenwelle 12 zu folgen. Dabei bewirkt die Nockenkontur ein Schwenken des Übertragungshebels 14 um die Schwenkachse 22 zum Betätigen des Hubventils 16.

Der Nockenfolger 28 und der Betätigungsabschnitt 34 sind auf gegenüberliegenden Seiten bezüglich der Schwenkachse 22 angeordnet. Mit anderen Worten gesagt, der Übertragungshebel 14 ist als ein Kipphebel ausgebildet. In anderen Ausführungsformen können der Nockenfolger 28 und der Betätigungsabschnitt 34 auf der gleichen Seite bezüglich der Schwenkachse 22 angeordnet sein. D. h., der Übertragungshebel kann beispielsweise auch als ein Schlepphebel ausgebildet sein.

Der Nockenfolger 28 kann wahlweise einer Nockenkontur des ersten Nockens 18 (wie in Figur 1 und 2 dargestellt) oder einer Nockenkontur des zweiten Nockens 20 folgen. Dazu kann die Halterung 26 zwischen einer ersten Axialposition und einer zweiten Axialposition verschoben werden. In der ersten Axialposition hält die Halterung 26 den Nockenfolger 28 so, dass der Nockenfolger 28 der Nockenkontur des ersten Nockens 18 folgt. In der zweiten Axialposition folgt der Nockenfolger 28 der Nockenkontur des zweiten Nockens 20. Die erste und zweite Axialposition können beispielsweise durch Anschläge für die Halterung 26 definiert sein.

Dies ermöglicht, dass unterschiedliche Nockenkonturen zum Betätigen des Hubventils 16 verwendet werden können. So können verschiedene Steuerzeiten für ein oder mehrere Hubventile 16 beispielsweise in Abhängigkeit einer Last realisiert werden. Denkbar ist beispielsweise eine Umschaltung zwischen Normalsteuerzeiten und Miller-Steuerzeiten für ein oder mehrere Einlassventile. Die Normalsteuerzeiten entsprechen bspw. den Steuerzeiten für einen Otto- oder Dieselkreisprozess. Ein Auslassventil kann beispielsweise zwischen einem Normalbetrieb mit einer Öffnung des Auslassventils im Ausschubtakt und einem Motorbremsbetrieb umgeschaltet werden. Im Motorbremsbetrieb wird beispielsweise kein Kraftstoff eingespritzt und das Auslassventil beispielsweise zum Ende des Verdichtungstaktes und/oder zum Ende des Ausschubtaktes geöffnet, sodass eine negative Arbeit vom entsprechenden Zylinder verrichtet wird, der die Kurbelwelle bremst.

In einigen Ausführungsformen kann die Halterung 26 zusätzlich so verschoben werden, dass der Nockenfolger 28 einer Nockenkontur eines weiteren Nockens der Nockenwelle 12 folgt. Dazu kann die Nockenwelle 12 mindestens einen weiteren Nocken aufweisen. Der mindestens eine weitere Nocken ist in einer Längsrichtung der Nockenwelle 12 versetzt zu dem ersten Nocken 18 und dem zweiten Nocken 20 angeordnet ist. Eine Nockenkontur jedes weiteren Nockens unterscheidet sich von einer Nockenkontur des zweiten Nockens 20 und einer Nockenkontur des ersten Nockens 18. Alternativ können die Nocken in einer Umfangsrichtung um eine Längsachse der Nockenwelle 12 versetzt angeordnet sein. Die Nocken können beispielsweise direkt aneinandergrenzen.

Zum Verschieben der Halterung 26 ist eine Aktorvorrichtung vorgesehen. Die Aktorvorrichtung ist dazu ausgebildet, die Halterung 26 parallel zur Schwenkachse 22 und zur Nockenwelle 12 axial zu verschieben. Im Einzelnen ist die Aktorvorrichtung dazu ausgebildet, die Halterung 26 mindestens zwischen der ersten Axialposition und der zweiten Axialposition zu verschieben. In der ersten Axialposition (gezeigt in den Figuren 1 und 2) ist der Nockenfolger 28 in Kontakt mit der Nockenkontur des ersten Nockens 18. In der zweiten Axialposition ist der Nockenfolger 28 in Kontakt mit der Nockenkontur des zweiten Nockens 20.

Die Aktorvorrichtung kann beispielsweise als eine pneumatische, hydraulische, elektromechanische und/oder elektromagnetische Aktorvorrichtung ausgebildet sein. Im Falle einer hydraulischen Aktorvorrichtung können beispielsweise ein Stellzylinder, ein System mit Federn und/oder zwei mit Hydraulikflüssigkeit befüllbare Kammern usw. verwendet werden.

In einigen Ausführungsformen kann die Aktorvorrichtung die Halterung 26 in nur einer Richtung axial verschieben, wobei eine Rückstellung mit elastischen Elementen, z. B. einer Feder, realisierbar ist. Alternativ kann die Aktorvorrichtung die Halterung 26 in einer ersten Richtung und einer zweiten, entgegengesetzten Richtung axial verschieben.

Die Aktorvorrichtung kann direkt oder indirekt, zum Beispiel über ein Gestänge, mit der Halterung 26 verbunden sein. In einigen Ausführungsformen kann die Aktorvorrichtung zumindest teilweise in dem Übertragungshebel 14 integriert oder extern von dem Übertragungshebel 14 angeordnet sein. Die Aktorvorrichtung kann insbesondere so ausgebildet sein oder angesteuert werden, dass die Halterung 26 und somit der Nockenfolger 28 nur zwischen einem Grundkreis des ersten Nockens 18 und einem Grundkreis des zweiten Nockens 20 verschoben wird.

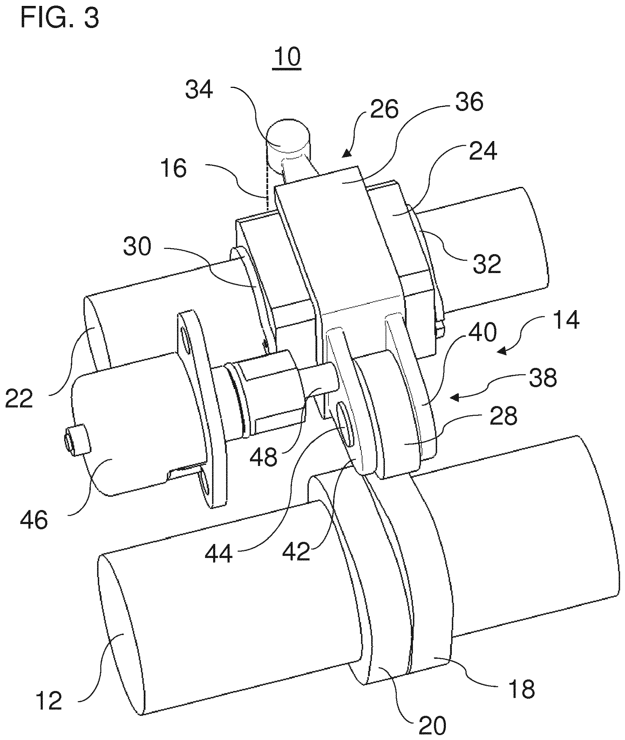

In der Figur 3 ist eine beispielhafte Aktorvorrichtung 46 dargestellt. Die Aktorvorrichtung 46 ist ortsfest an einem geeigneten Bauteil befestigt (nicht dargestellt). Die Aktorvorrichtung 46 weist einen bewegbaren Stift 48 auf, der an einer Fläche des Vorsprungs 42 angreift. Wie in Figur 3 dargestellt ist, bewirkt ein Ausfahren des Stifts 48 eine Verschiebung der Halterung 26, sodass der Nockenfolger 28 der Nockenkontur des ersten Nockens 18 folgt. Mit anderen Worten gesagt, bewirkt ein Ausfahren des Stifts 28 eine Verschiebung der Halterung 26 in die erste Axialposition. Damit der Nockenfolger 28 einer Nockenkontur des zweiten Nockens 20 folgt, ist eine Rückstellung erforderlich. Die Rückstellung kann beispielsweise über einen weiteren Aktor (nicht dargestellt) der Aktorvorrichtung 46 erfolgen. Der weitere Aktor kann beispielsweise an einer gegenüberliegenden Seite des Gabelbereichs 38 angreifen. Ebenso ist eine Rückstellung über elastische Elemente (nicht dargestellt) möglich.

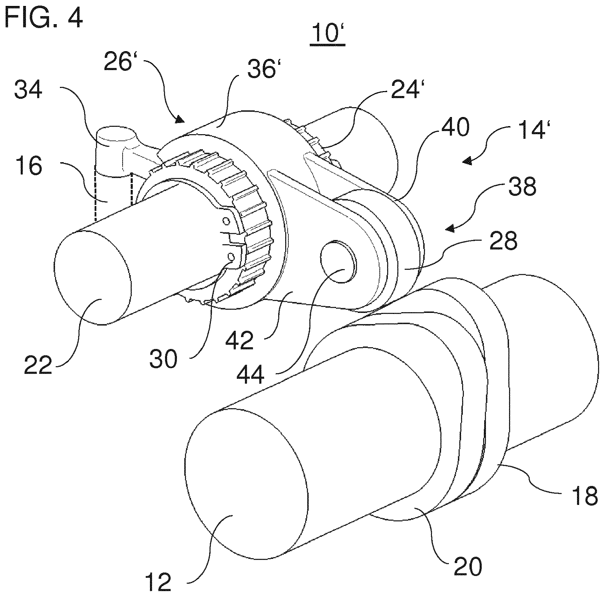

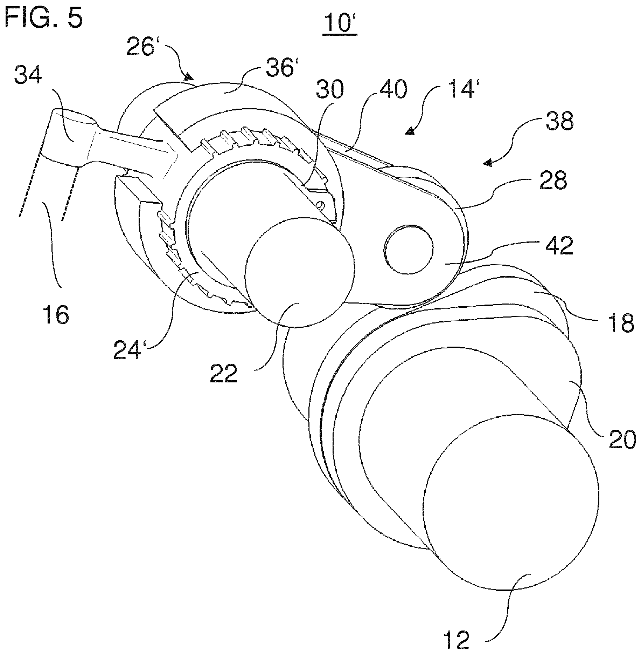

Die Figuren 4 und 5 zeigen eine weitere Ausführungsform des variablen Ventiltriebs. Der variable Ventiltrieb 10' der Figuren 4 und 5 ist ähnlich zu dem variablen Ventiltrieb 10 der Figuren 1 und 2 ausgebildet. Im Unterschied zu dem variablen Ventiltriebs 10 der Figuren 1 und 2 weist der variable Ventiltriebs 10' insbesondere ein modifiziertes Trägerbauteil 24' und eine modifizierte Halterung 26' auf.

Das Trägerbauteil 24' weist eine Außenprofilierung in Form einer Verzahnung auf. Die Außenprofilierung des Trägerbauteils 24' ist in Eingriff mit einer entsprechenden Innenprofilierung der Führung 36' der Halterung 26'. Die Führung 36' der Halterung 26' umgreift das Trägerbauteil 24' teilweise. Die Führung 36' weist einen Bogensegmentquerschnitt in einer Querschnittebene senkrecht zur Schwenkachse 22 auf. Die ineinandergreifenden Profilierungen des Trägerbauteils 24' und der Halterung 26' ermöglichen eine Axialverschiebung der Halterung 26' auf dem Trägerbauteil 24'. Die ineinandergreifenden Profilierungen verbinden die Haltung 26' zudem drehfest mit dem Trägerbauteil 24' um die Schwenkachse 22. Allgemein gesagt kann das Trägerbauteil in einer Querschnittsebene senkrecht zu einer Längsrichtung der Schwenkachse 22 eine zur Schwenkachse 22 rotationsasymmetrische Außenkontur aufweisen. Die Halterung kann eine entsprechende rotationsasymmetrische Innenkontur aufweisen. Dies ermöglicht eine Axialverschiebung der Halterung relativ zum Trägerbauteil und verbindet die Halterung gleichzeitig drehfest mit dem Trägerbauteil.

### Bezugszeichenliste

- 10: Variabler Ventiltrieb
- 12: Nockenwelle
- 14: Übertragungshebel (Kipphebel)
- 16: Hubventil (Ladungswechselventil)
- 18: Erster Nocken
- 20: Zweiter Nocken
- 22: Schwenkachse
- 24: Trägerbauteil
- 26: Halterung
- 28: Nockenfolger (Rolle)
- 30: Erster Sicherungsring
- 32: Zweiter Sicherungsring
- 34: Betätigungsabschnitt
- 36: Führungsbereich
- 38: Gabelbereich
- 40: Erster Vorsprung
- 42: Zweiter Vorsprung
- 44: Drehachse
- 46: Aktorvorrichtung
- 48: Stift

## Patentansprüche

1. Variabler Ventiltrieb (10) für einen Verbrennungsmotor, aufweisend:
mindestens ein Hubventil (16), insbesondere ein Ladungswechselventil;
eine Nockenwelle (12), die einen ersten Nocken (18) und einen in einer Längsrichtung der Nockenwelle (12) versetzt angeordneten zweiten Nocken (20) aufweist, wobei sich eine Nockenkontur des ersten Nockens (18) von einer Nockenkontur des zweiten Nockens (20) unterscheidet und/oder der erste Nocken (18) und der zweiten Nocken (20) in einer Umfangsrichtung um eine Längsachse der Nockenwelle (12) versetzt angeordnet sind; und
einen Übertragungshebel (14), der in Wirkverbindung zwischen dem mindestens einen Hubventil (16) und der Nockenwelle (12) zum Betätigen des mindestens einen Hubventils (16) angeordnet ist, wobei:
der Übertragungshebel (14) eine Schwenkachse (22), eine Halterung (26) und einen Nockenfolger (28) aufweist;
die Halterung (26) schwenkbar um die Schwenkachse (22) gelagert ist;
die Halterung (26) den Nockenfolger (28) hält; und
die Halterung (26) parallel zur Schwenkachse (22) und/oder parallel zur Nockenwelle (12) axial verschiebbar gelagert ist, sodass der Nockenfolger (28) wahlweise der Nockenkontur des ersten Nockens (18) oder der Nockenkontur des zweiten Nockens (20) folgt,
wobei:
der Übertragungshebel (14) ferner ein Trägerbauteil (24) aufweist, das schwenkbar um die Schwenkachse (22) gelagert ist, **dadurch gekennzeichnet, dass** das Trägerbauteil (24) die Halterung (26) axial verschiebbar lagert; und
die Halterung (26) das Trägerbauteil (24) teilweise umgreift.

2. Variabler Ventiltrieb (10) nach Anspruch 1, wobei:
das Trägerbauteil (24) oder die Halterung (26) eine Achsbohrung für die Schwenkachse (22) aufweist; und/oder
das Trägerbauteil (24) mit der Halterung (26) drehfest um die Schwenkachse (22) verbunden ist, insbesondere über einen Formschluss zwischen der Halterung (26) und dem Trägerbauteil (24).

3. Variabler Ventiltrieb (10) nach Anspruch 2, wobei:
das Trägerbauteil (24) in einer Querschnittsebene senkrecht zu einer Längsrichtung der Schwenkachse (22) eine zur Schwenkachse (22) rotationsasymmetrische Außenkontur aufweist; und/oder
die Halterung (26) in einer Querschnittsebene senkrecht zu einer Längsrichtung der Schwenkachse (22) eine zur Schwenkachse (22) rotationsasymmetrische Innenkontur aufweist.

4. Variabler Ventiltrieb (10) nach Anspruch 3, wobei:
die Außenkontur und/oder die Innenkontur eine Profilierung, vorzugsweise ein Keilprofil oder Zahnprofil, aufweist; und/oder
die Außenkontur und/oder die Innenkontur insbesondere eine Mehreckform, zum Beispiel eine Rechteckform, aufweist.

5. Variabler Ventiltrieb (10) nach einem der Ansprüche 1 bis 4, wobei das Trägerbauteil (24) auf der Schwenkachse (22) axial gesichert ist, zum Beispiel durch einen auf der Schwenkachse (22) gesicherten Sicherungsring (30, 32) oder eine Passfeder.

6. Variabler Ventiltrieb (10) nach einem der vorherigen Ansprüche, wobei die Halterung (26) und/oder das Trägerbauteil (24) einen Betätigungsabschnitt (34) zum Betätigen des mindestens einen Hubventils (16) aufweist.

7. Variabler Ventiltrieb (10) nach einem der vorherigen Ansprüche, wobei:
die Halterung (26) einen Gabelbereich (38) mit zwei gegenüberliegenden Vorsprüngen (40, 42) aufweist, wobei sich zwischen den Vorsprüngen (40, 42) insbesondere eine Drehachse (44) erstreckt, auf der der Nockenfolger (28) drehbar gelagert ist, und/oder
der Nockenfolger (28) als eine Rolle ausgebildet ist, die von der Halterung (26) insbesondere drehbar gelagert ist.

8. Variabler Ventiltrieb (10) nach einem der vorherigen Ansprüche, ferner aufweisend eine Aktorvorrichtung (46), die dazu ausgebildet ist, die Halterung (26) parallel zur Schwenkachse (22) und/oder zur Nockenwelle (12) axial zu verschieben.

9. Variabler Ventiltrieb (10) nach Anspruch 8, wobei:
die Aktorvorrichtung (46) als eine pneumatische, hydraulische, elektromechanische und/oder elektromagnetische Aktorvorrichtung (46) ausgebildet ist; und/oder
die Aktorvorrichtung (46) direkt oder indirekt, zum Beispiel über ein Gestänge, mit der Halterung (26) verbunden ist; und/oder
die Aktorvorrichtung (46) zumindest teilweise in dem Übertragungshebel (14) integriert oder extern von dem Übertragungshebel (14) angeordnet ist.

10. Variabler Ventiltrieb (10) nach Anspruch 8 oder Anspruch 9, wobei:
die Aktorvorrichtung (46) zum Verschieben der Halterung (26) an einer Seitenfläche der Halterung (26), die sich senkrecht zu einer Längsrichtung der Schwenkachse (22) erstreckt, angreift, insbesondere an einem Vorsprung (40, 42) eines Gabelbereichs (38) der Halterung (26); und/oder
die Aktorvorrichtung (46) so ausgebildet ist und/oder angesteuert wird, dass der Nockenfolger (28) nur zwischen einem Grundkreis des ersten Nockens (18) und einem Grundkreis des zweiten Nockens (20) verschoben wird.

11. Variabler Ventiltrieb (10) nach einem der vorherigen Ansprüche, wobei:
die Nockenwelle (12) mindestens einen weiteren Nocken aufweist, der in einer Längsrichtung der Nockenwelle (12) versetzt zu dem ersten Nocken (18) und dem zweiten Nocken (20) angeordnet ist, wobei eine Nockenkontur jedes weiteren Nockens sich von einer Nockenkontur des ersten Nockens (18) und einer Nockenkontur des zweiten Nockens (20) unterscheidet und/oder jeder weitere Nocken in einer Umfangsrichtung um eine Längsachse der Nockenwelle (12) versetzt zu dem ersten Nocken (18) und dem zweiten Nocken (20) angeordnet ist; und
der Nockenfolger (28) durch eine Verschiebung der Halterung (26) zusätzlich wahlweise der Nockenkontur jedes weiteren Nockens folgt.

12. Variabler Ventiltrieb (10) nach einem der vorherigen Ansprüche, wobei der Übertragungshebel (14) als ein Schlepphebel oder ein Kipphebel ausgebildet ist.

13. Verbrennungsmotor mit einem variablen Ventiltrieb (10) nach einem der vorherigen Ansprüche, wobei:
das mindestens eine Hubventil (16) ein Einlassventil des Verbrennungsmotors ist und der erste Nocken (18) einen Normalbetrieb bewirkt und/oder der zweite Nocken (20) einen Millerbetrieb, einen Atkinsonbetrieb, einen Thermomanagementbetrieb, einen Dekompressionsbetrieb oder eine Zylinderabschaltung bewirkt; oder
das mindestens eine Hubventil (16) ein Auslassventil des Verbrennungsmotors ist und der erste Nocken (18) einen Normalbetrieb bewirkt und/oder der zweite Nocken (20) einen Motorbremsbetrieb, einen Thermomanagementbetrieb, einen Dekompressionsbetrieb oder eine Zylinderabschaltung bewirkt.

14. Kraftfahrzeug, insbesondere Nutzfahrzeug, mit einem variablen Ventiltrieb (10) nach einem der Ansprüche 1 bis 12 oder mit dem Verbrennungsmotor nach Anspruch 13.

## Claims

1. A variable valve gear (10) for a combustion engine, comprising:
at least one lift valve (16), in particular a charge cycle valve;
a camshaft (12), which comprises a first cam (18) and a second cam (20) arranged offset in a longitudinal direction of the camshaft (12), wherein a cam contour of the first cam (18) differs from a cam contour of the second cam (20) and/or the first cam (18) and the second cam (20) are arranged offset in a circumferential direction about a longitudinal axis of the camshaft (12); and
a transmission lever (14), which is arranged in operative connection between at least the one lift valve (16) and the camshaft (12) for actuating at least the one lift valve (16), wherein:
the transmission lever (14) comprises a swivel axis (22), a mounting (26) and a cam follower (28);
the mounting (26) is supported so that it can swivel about the swivel axis (22);
the mounting (26) holds the cam follower (28); and
the mounting (26) is supported so that it is axially displaceable parallel to the swivel axis (22) and/or parallel to the camshaft (12), so that the cam follower (28) follows either the cam contour of the first cam (18) or the cam contour of the second cam (20),
wherein:
the transmission lever (14) further comprises a carrier component (24), which is supported so that it can swivel about the swivel axis (22), **characterized in that** the carrier component (24) supports the mounting (26) so that it is axially displaceable; and the mounting (26) partially encloses the carrier component (24).

2. The variable valve gear (10) according to Claim 1, wherein:
the carrier component (24) or the mounting (26) comprises an axial bore for the swivel axis (22); and/or
the carrier component (24) is torsionally fixed to the mounting (26) about the swivel axis (22), in particular via a positive interlock between the mounting (26) and the carrier component (24).

3. The variable valve gear (10) according to Claim 2, wherein:
the carrier component (24) in a cross sectional plane perpendicular to a longitudinal direction of the swivel axis (22) has an external contour that is rotationally asymmetrical around the swivel axis (22); and/or
the mounting (26) in a cross sectional plane perpendicular to a longitudinal direction of the swivel axis (22) has an internal contour that is rotationally asymmetrical around the swivel axis (22).

4. The variable valve gear (10) according to Claim 3, wherein:
the external contour and/or the internal contour comprises a profiling, preferably a splined profile or a toothed profile; and/or
the external contour and/or the internal contour in particular has a polygonal shape, for example a rectangular shape.

5. The variable valve gear (10) according to one of Claims 1 to 4, wherein the carrier component (24) is axially secured on the swivel axis (22), for example by a retaining ring (30, 32) secured on the swivel axis (22), or a fitted key.

6. The variable valve gear (10) according to one of the preceding claims, wherein the mounting (26) and/or the carrier component (24) comprises an actuation portion (34) for actuating at least the one lift valve (16).

7. The variable valve gear (10) according to one of the preceding claims, wherein:
the mounting (26) comprises a fork area (38) with two opposite projections (40, 42), wherein in particular an axis of rotation (44), on which the cam follower (28) is rotatably supported, extends between the projections (40, 42), and/or
the cam follower (28) is embodied as a roller, which is, in particular, rotatably supported by the mounting (26).

8. The variable valve gear (10) according to one of the preceding claims, further comprising an actuator device (46), which is designed to displace the mounting (26) axially, parallel to the swivel axis (22) and/or to the camshaft (12).

9. The variable valve gear (10) according to Claim 8, wherein:
the actuator device (46) is embodied as a pneumatic, hydraulic, electromechanical and/or electromagnetic actuator device (46); and/or
the actuator device (46) is directly or indirectly connected, for example via a linkage, to the mounting (26) ; and/or
the actuator device (46) is at least partially integrated in the transmission lever (14) or arranged outside the transmission lever (14).

10. The variable valve gear (10) according to Claim 8 or Claim 9, wherein:
the actuator device (46) displaces the mounting (26) by impinging on a lateral face of the mounting (26), which extends perpendicular to a longitudinal direction of the swivel axis (22), in particular on a projection (40, 42) of a fork area (38) of the mounting (26); and/or
the actuator device (46) is designed and/or controlled so that the cam follower (28) is displaced only between a base circle of the first cam (18) and a base circle of the second cam (20).

11. The variable valve gear (10) according to one of the preceding claims, wherein:
the camshaft (12) comprises at least one further cam, which is arranged offset in a longitudinal direction of the camshaft (12) relative to the first cam (18) and the second cam (20), wherein a cam contour of each further cam differs from a cam contour of the first cam (18) and a cam contour of the second cam (20) and/or each further cam is arranged offset in a circumferential direction about a longitudinal axis of the camshaft (12) relative to the first cam (18) and the second cam (20); and
a displacement of the mounting (26) also alternatively causes the cam follower (28) to follow the cam contour of each further cam.

12. The variable valve gear (10) according to one of the preceding claims, wherein the transmission lever (14) is embodied as a finger follower arm or a rocker arm.

13. A combustion engine having a variable valve gear (10) according to one of the preceding claims, wherein:
at least the one lift valve (16) is an inlet valve of the combustion engine and the first cam (18) produces a normal operation and/or the second cam (20) produces a Miller cycle, an Atkinson cycle, a heat management cycle, a decompression cycle or a cylinder shutoff; or
at least the one lift valve (16) is an exhaust valve of the combustion engine and the first cam (18) produces a normal operation and/or the second cam (20) produces an engine braking cycle, a heat management cycle, a decompression cycle or a cylinder shutoff.

14. A motor vehicle, in particular a commercial vehicle, having a variable valve gear (10) according to one of Claims 1 to 12 or having the combustion engine according to Claim 13.

## Revendications

1. Commande de soupape variable (10) pour un moteur à combustion interne, comprenant :
au moins une soupape à course rectiligne (16), en particulier une soupape de changement de charge ;
un arbre à cames (12) qui comprend une première came (18) et une deuxième came (20) disposée de manière décalée dans une direction longitudinale de l'arbre à cames (12), dans laquelle un contour de la première came (18) diffère d'un contour de la deuxième came (20) et/ou la première came (18) et la deuxième came (20) sont disposées de manière décalée dans une direction périphérique autour d'un axe longitudinal de l'arbre à cames (12) ; et
un levier de transmission (14) qui est disposé en liaison fonctionnelle entre ladite au moins une soupape à course rectiligne (16) et l'arbre à cames (12) pour l'actionnement de ladite au moins une soupape à course rectiligne (16), dans laquelle :
le levier de transmission (14) comprend un axe de pivotement (22), un support (26) et un suiveur de came (28) ;
le support (26) est monté de manière à pouvoir pivoter autour de l'axe de pivotement (22) ;
le support (26) maintient le suiveur de came (28) ; et le support (26) est monté de manière mobile axialement parallèlement à l'axe de pivotement (22) et/ou parallèlement à l'arbre à cames (12), de sorte que le suiveur de came (28) suit sélectivement le contour de la première came (18) ou le contour de la deuxième came (20), dans laquelle :
le levier de transmission (14) comprend en outre un composant porteur (24) qui est monté de manière à pouvoir pivoter autour de l'axe de pivotement (22), **caractérisé en ce que** le composant porteur (24) supporte le support (26) de manière axialement mobile ; et
le support (26) vient en prise partiellement autour du composant porteur (24).

2. Commande de soupape variable (10) selon la revendication 1, dans laquelle :
le composant porteur (24) ou le support (26) comprend un alésage pour l'axe de pivotement (22) ; et/ou le composant porteur (24) est relié au support (26) de manière solidaire en rotation autour de l'axe de pivotement (22), en particulier par le biais d'une complémentarité de forme entre le support (26) et le composant porteur (24).

3. Commande de soupape variable (10) selon la revendication 2, dans laquelle :
le composant porteur (24) présente, dans un plan de section transversale perpendiculaire à une direction longitudinale de l'axe de pivotement (22), un contour extérieur à asymétrie de révolution par rapport à l'axe de pivotement (22) ; et/ou
le support (26) présente, dans un plan de section transversale perpendiculaire à une direction longitudinale de l'axe de pivotement (22), un contour intérieur à asymétrie de révolution par rapport à l'axe de pivotement (22).

4. Commande de soupape variable (10) selon la revendication 3, dans laquelle :
le contour extérieur et/ou le contour intérieur présentent un profilage, de préférence un profil cannelé ou un profil denté ; et/ou
le contour extérieur et/ou le contour intérieur présentent une forme polygonale, par exemple une forme rectangulaire.

5. Commande de soupape variable (10) selon l'une des revendications 1 à 4, dans laquelle le composant porteur (24) est assujetti axialement sur l'axe de pivotement (22), par exemple au moyen d'une bague de fixation (30, 32) assujettie sur l'axe de pivotement (22) ou d'une clavette parallèle.

6. Commande de soupape variable (10) selon l'une des revendications précédentes, dans laquelle le support (26) et/ou le composant porteur (24) comprennent une partie de fixation (34) pour la fixation de ladite au moins une soupape à course rectiligne (16).

7. Commande de soupape variable (10) selon l'une des revendications précédentes, dans laquelle :
le support (26) comprend une région de fourche (38) dotée de deux saillies (40, 42) en regard, dans laquelle un axe de rotation (44) s'étend en particulier entre les saillies (40, 42), axe sur lequel le suiveur de came (28) est monté rotatif, et/ou
le suiveur de came (28) est réalisé sous la forme d'un galet qui est supporté en particulier de manière rotative par le support (26).

8. Commande de soupape variable (10) selon l'une des revendications précédentes, comprenant en outre un dispositif d'actionnement (46), qui est conçu pour déplacer axialement le support (26) parallèlement à l'axe de pivotement (22) et/ou à l'arbre à cames (12) axial.

9. Commande de soupape variable (10) selon la revendication 8, dans laquelle :
le dispositif d'actionnement (46) est réalisé en tant que dispositif d'actionnement (46) pneumatique, hydraulique, électromécanique et/ou électromagnétique ; et/ou
le dispositif d'actionnement (46) est relié au support (26) directement ou indirectement, par exemple par le biais d'une tringlerie ; et/ou
le dispositif d'actionnement (46) est intégré au moins partiellement dans le levier de transmission (14) ou est disposé à l'extérieur du levier de transmission (14).

10. Commande de soupape variable (10) selon la revendication 8 ou la revendication 9, dans laquelle :
le dispositif d'actionnement (46) agit, pour le déplacement du support (26), sur une surface latérale du support (26) qui s'étend perpendiculairement à une direction longitudinale de l'axe de pivotement (22), en particulier sur une saillie (40, 42) d'une région de fourche (38) du support (26) ; et/ou
le dispositif d'actionnement (46) est conçu et/ou commandé de telle sorte que le suiveur de came (28) n'est déplacé qu'entre un cercle de base de la première came (18) et un cercle de base de la deuxième came (20).

11. Commande de soupape variable (10) selon l'une des revendications précédentes, dans laquelle :
l'arbre à cames (12) comprend au moins une autre came qui est disposée de manière décalée par rapport à la première came (18) et à la deuxième came (20) dans une direction longitudinale de l'arbre à cames (12), dans laquelle un contour de chaque autre came diffère d'un contour de la première came (18) et d'un contour de la deuxième came (20) et/ou chaque autre came est disposée de manière décalée par rapport à la première came (18) et à la deuxième came (20) dans une direction périphérique autour d'un axe longitudinal de l'arbre à cames (12) ; et
le suiveur de came (28) suit en outre sélectivement le contour de chaque autre came par un déplacement du support (26).

12. Commande de soupape variable (10) selon l'une des revendications précédentes, dans laquelle le levier de transmission (14) est réalisé en tant que levier oscillant ou en tant que culbuteur.

13. Moteur à combustion interne comprenant une commande de soupape variable (10) selon l'une des revendications précédentes, dans lequel :
ladite au moins une soupape à course rectiligne (16) est une soupape d'admission du moteur à combustion interne et la première came (18) produit un fonctionnement normal et/ou la deuxième came (20) produit un fonctionnement en cycle de Miller, un fonctionnement en cycle d'Atkinson, un fonctionnement de gestion thermique, un fonctionnement de décompression ou une coupure de cylindre ; ou
ladite au moins une soupape à course rectiligne (16) est une soupape d'échappement du moteur à combustion interne et la première came (18) produit un fonctionnement normal et/ou la deuxième came (20) produit un fonctionnement de frein moteur, un fonctionnement de gestion thermique, un fonctionnement de décompression ou une coupure de cylindre.

14. Véhicule automobile, en particulier véhicule utilitaire, comprenant une commande de soupape variable (10) selon l'une des revendications 1 à 12 et/ou comprenant le moteur à combustion interne selon la revendication 13.
